# EUROPÄISCHE PATENTSCHRIFT

(11) **EP 2 669 155 B1**
(45) Veröffentlichungstag und Bekanntmachung des Hinweises auf die Patenterteilung: **04.01.2017**
(21) Anmeldenummer: 13168269.2
(22) Anmeldetag: 17.05.2013
(51) Int. Cl.: B62D 59/04

(54) **Anhänger-Rangierantrieb mit Getriebe mit nicht paralleler Achsanordnung**
Trailer manoeuvring drive with a gear unit with non-parallel axle arrangement
Entraînement de rangement pour remorque avec engrenage doté d'un agencement d'axes non parallèles

(30) Priorität: 29.05.2012 DE 102012010547
(43) Veröffentlichungstag der Anmeldung: 04.12.2013
(73) Patentinhaber: Truma Gerätetechnik GmbH & Co. KG, 85640 Putzbrunn (DE)
(72) Erfinder: Aemisegger, Steve, 81547 München (DE); Müller, Jochen, 85665 Moosach (DE); Gumpp, Daniel, 86415 Mering (DE); Schmid, Tobias, 85435 Erding (DE); Jäger, Markus, 85635 Höhenkirchen-Siegertsbrunn (DE)
(74) Vertreter: Prinz & Partner mbB

(56) Entgegenhaltungen:
- EP-A1- 1 714 858

## Beschreibung

Die Erfindung betrifft einen Rangierantrieb für einen Anhänger, insbesondere für Wohnwagen, Bootsanhänger, Pferdeanhänger, Marktanhänger, Lastanhänger u. ä., nach dem Oberbegriff des Anspruchs 1.

Anhänger werden üblicherweise von Zugmaschinen gezogen. So ist es bekannt, dass ein Pkw einen Wohnwagen ziehen kann. Wenn der Anhänger von der Zugmaschine abgenommen ist, wird er meist von Hand in die endgültige Position geschoben. Jedoch werden heutzutage zunehmend Anhänger im Wohnwagenbereich angeboten, die aufgrund ihrer Größe und damit ihres Gewichts nur noch unter Mühe von Hand verschoben werden können. Daher wurden Rangier- bzw. Hilfsantriebe entwickelt, die es ermöglichen. einen Anhänger auch ohne Zugmaschine mit Motorunterstützung zu verschieben bzw. zu drehen.

In der EP 1 714 858 A1 wird ein Rangierantrieb für einen Fahrzeuganhänger mit einseitig gelagerter Antriebsrolle beschrieben. Der Rangierantrieb weist einen relativ zu einem Fahrgestell des Anhängers bewegbaren Träger auf, der einen Antriebsmotor und eine Antriebsrolle trägt. Ein Bewegungsmechanismus dient zum Bewegen des Trägers zwischen einer Ruheposition, in der die Antriebsrolle von einem Rad des Anhängers getrennt ist, und einer Antriebsposition, in der die Antriebsrolle gegen das Rad des Anhängers gedrückt wird. Der Antriebsmotor treibt die Antriebsrolle über ein ein Schneckenrad aufweisendes Getriebe an, wobei die Drehachsen von Antriebsmotor und Antriebsrolle senkrecht zueinander stehen.

Aus der EP 2 208 661 A1 ist ein Rangierantrieb bekannt, bei dem sowohl der Antriebsmotor als auch das Getriebe innerhalb der Antriebsrolle angeordnet sind. Die Drehachsen von Antriebsmotor und Antriebsrolle sind dabei deckungsgleich.

In der GB 2 4 39 383 A ist ein Rangierantrieb beschrieben, bei dem der Antriebsmotor und die Antriebsrolle parallel zueinander liegende Drehachsen aufweisen.

Der Erfindung liegt die Aufgabe zugrunde, einen Rangiertrieb für einen Anhänger anzugeben, der ein verbessertes Antriebskonzept aufweist, das zudem möglichst kompakt realisiert werden kann.

Die Aufgabe wird durch einen Rangierantrieb für einen Anhänger mit den Merkmalen von Anspruch 1 gelöst. Vorteilhafte Ausgestaltungen sind in den abhängigen Ansprüchen angegeben.

Ein Rangierantrieb für einen Anhänger, mit einer Befestigungseinrichtung zum Befestigen an dem Anhänger, einem relativ zu der Befestigungseinrichtung bewegbaren Träger, einem von dem Träger gehaltenen Antriebsmotor, und mit einer von dem Antriebsmotor drehend antreibbaren Antriebsrolle, ist dadurch gekennzeichnet, dass die Drehachse des Antriebsmotors schräg zur Drehachse der Antriebsrolle verläuft, also in einem schrägen Winkel zu der Drehachse der Antriebsrolle steht.

Bei einer Variante ist eine Bewegungseinrichtung vorgesehen, zum Bewegen des Trägers zwischen einer Ruheposition, in der die Antriebsrolle von einem Rad des Anhängers getrennt ist, und einer Antriebsposition, in der die Antriebsrolle gegen das Rad des Anhängers gedrückt wird.

Der Rangierantrieb weist typischerweise den relativ zu der Befestigungseinrichtung bewegbaren Träger auf, der den Antriebsmotor und die Antriebsrolle trägt bzw. lagert. Mit Hilfe der Bewegungseinrichtung kann der Träger zwischen der Ruheposition und der Antriebsposition hin - und her bewegt werden, sodass die Antriebsrolle bei Bedarf gegen das Rad des Anhängers, insbesondere gegen die Lauffläche des Anhängerrads angedrückt oder von dem Rad abgehoben wird. Dieser Aufbau ist zum Beispiel aus der EP 1 7 14 858 A1 bekannt.

Es hat sich herausgestellt, dass der Bauraum durch das zueinander Schrägstellen von Antriebsmotor und Antriebsrolle optimal ausgenutzt werden kann. Gerade bei modernen Wohnwagenanhängern ist der zur Verfügung stehende Bauraum unterhalb des Chassis oder im Radkasten begrenzt. Ein Grund dafür ist es, dass zu große Radkästen oder Freiräume im unteren Bereich des Anhängers die äußere Anmutung beeinträchtigen können. Zudem vermindern größere Ausschnitte im Bereich der Anhängerräder die Aerodynamik und können so zu einem erhöhten Kraftstoffverbrauch führen.

Dementsprechend besteht das Bedürfnis, Rangierantriebe für Anhänger möglichst kompakt zu bauen. Durch das Schrägstellen der Drehachsen von Antriebsmotor und Antriebsrolle ergibt sich die Möglichkeit, den zur Verfügung stehenden Bauraum optimal auszunutzen. Zudem hat sich herausgestellt, dass durch ein leichtes Anstellen des Winkels die Geräuschentwicklung eines zur Kraftübertragung genutzten Getriebes vermindert werden kann, sodass der erfindungsgemäße Rangierantrieb geräuscharm ist.

Die Schrägstellung der Drehachsen kann bedeuten, dass die Drehachsen in einer gemeinsamen Horizontalebene liegen, jedoch zueinander schräg stehen. Ebenso ist es möglich, dass sich eine oder beide Drehachsen auch mit einer Vertikalkomponente erstrecken, so dass die Drehachsen windschief zueinander stehen, also eine Art räumliche Schrägstellung erreicht wird. Z. B. kann eine der Drehachsen ausschließlich in einer Horizontalebene liegen, während die andere Drehachse sich sowohl in Horizontal- als auch in Vertikalrichtung erstreckt.

Die Schrägstellung der Drehachsen wird derart erreicht, dass der Winkel zwischen der Antriebsmotor- Drehachse (der Drehachse des Antriebsmotors) und der Antriebsrollen- Drehachse (der Drehachse der Antriebsrolle) größer als 0° ist, sodass die Drehachsen nicht parallel zueinander stehen. Gerade die parallele Anordnung der Drehachsen beim Stand der Technik führt zu einem relativ breiten, wuchtigen Rangierantrieb mit einem erhöhten Bauraumerfordernis.

Die Schrägstellung der Drehachsen wird zudem dadurch erreicht, dass der Winkel zwischen der Antriebsmotor-Drehachse und der Antriebsrollen-Drehachse ungleich 90° ist, sodass die Drehachsen nicht senkrecht zueinander stehen. Bei der senkrechten Anordnung der Drehachsen im Stand der Technik ist der Rangierantrieb zwar verhältnismäßig schlank gestaltet. Jedoch erfordert der schlanke Aufbau eine langgestreckte Ausführung, die entsprechenden Bauraum erfordert.

Somit bedeutet eine "schräge" Anordnung der Achsen, dass die Achsen nicht im Winkel von 0° oder von 90° zueinander stehen. Z. B. kann der Winkel in einem Bereich zwischen 1° und 89°, bevorzugt zwischen 2° und 88° liegen.

Bereits eine Schrägstellung von wenigen Grad kann dazu führen, dass ein zur Kraftübertragung zwischen dem Antriebsmotor und der Antriebsrolle vorgesehenes Getriebe eine deutlich geringere Geräuschentwicklung zeigt. Hierbei hat sich eine Winkelstellung zwischen 1 und 10° insbesondere zwischen 3 und 10° als geeignet erwiesen.

Auch andere Winkelbereiche für die Schrägstellung der Drehachsen können vorteilhaft sein. Eine Winkelstellung zwischen 10° und 80° bzw. - je nach Bezugnahme der Winkelmessung zwischen 100° und 170°, aber auch bis knapp unter 180° können zweckmäßig sein.

Die Winkelstellung erfordert eine geeignete Auswahl und Gestaltung der notwendigen Getriebeeinrichtung, wie später noch erläutert wird.

Die Schrägstellung sollte insbesondere in der Ruheposition, also im entlasteten Zustand bestehen.

Die Antriebsrolle kann an dem Träger einseitig gelagert sein.

Im Kraftfluss zwischen dem Antriebsmotor und der Antriebsrolle kann eine Getriebeeinrichtung vorgesehen sein. Mit Hilfe der Getriebeeinrichtung wird die Antriebsleistung des Antriebsmotors auf die Antriebsrolle übertragen. Dabei kann insbesondere die üblicherweise hohe Motordrehzahl untersetzt werden, um sie in eine geeignete Drehzahl für die Antriebsrolle zu wandeln. Gleichzeitig wird das Antriebsdrehmoment des Motors erhöht, sodass die Antriebsrolle das ihr zugeordnete Anhängerrad kraftvoll bewegen kann.

Die Getriebeeinrichtung kann von dem Träger gehalten sein. Bei einer Ausführungsform kann der Träger zum Beispiel gleichzeitig einen Teil des Getriebegehäuses bilden, sodass der Träger und das Getriebegehäuse in einer Baugruppe integriert sind.

Die Getriebeeinrichtung kann wenigstens eine Komponente aufweisen, ausgewählt aus der Gruppe Stirnradstufe, Kegelradstufe, Kronradstufe, Schneckenradstufe, Hypoidstufe, Doppelzahnrad, einstückig ausgeführtes Doppelzahnrad. Je nach Winkelstellung zwischen der Drehachse des Antriebsmotors und der Drehachse der Antriebsrolle kann somit ein geeignetes Getriebe aufgebaut werden, wobei auch verschiedene Komponenten miteinander kombinierbar sind.

Bei den Zahnrädern kann eine Geradeverzahnung oder eine Schrägverzahnung verwendet werden.

Das einstückig ausgeführte Doppelzahnrad, also zwei Zahnräder - meist mit unterschiedlicher Zähnezahl - auf einer gemeinsamen Drehachse - kann gerade bei höheren Stückzahlen einfach hergestellt werden. Bei geschickter Auslegung des Getriebes ist es möglich, mit mehreren Gleichkomponenten, also zum Beispiel mehreren, in geeigneter Weise gepaarten Doppelzahnrädern, sehr einfach das Getriebe aufzubauen.

Vor allem die Stirnrad - und Kegelradstufen können dabei vorteilhaft sein, weil sie den Aufbau von Getrieben mit hohem Wirkungsgrad ermöglichen. Demgegenüber weist zum Beispiel eine Schneckenradstufe einen deutlich geringeren Wirkungsgrad auf, der unter Umständen derart niedrig sein kann, dass das Getriebe selbsthemmend ist. Dies wiederum hat den Vorteil, dass keine zusätzliche Bremseinrichtung vorgesehen sein muss, um den Rangierantrieb zum Bremsen und Halten des ihm zugeordneten Anhängerrads zu nutzen.

Alternativ zu einem Zahnradgetriebe können auch andere Getriebearten verwendet werden, beispielsweise ein Riemengetriebe.

Bei einer Variante weist der Antriebsmotor eine Antriebswelle auf, die sich entlang der Antriebsmotor-Drehachse erstreckt. Dementsprechend weist die Antriebsrolle eine Rollenwelle auf, die sich entlang der Antriebsrollen- Drehachse erstreckt. Die Getriebeeinrichtung kann wenigstens eine Zwischenstufe mit einer Getriebewelle aufweisen, wobei die Getriebewelle parallel zu der Antriebswelle oder parallel zu der Rollenwelle angeordnet ist. Dabei kann die Getriebewelle zwischen der Antriebswelle und der Rollenwelle angeordnet sein. Das bedeutet, dass - wenn man eine Hauptorientierung des Rangierantriebs zugrunde legt, die durch die Anordnung der meisten Komponenten bestimmt wird und z.B. einer Bewegungsachse des Trägers bei seiner Bewegung zwischen Ruhe- und Antriebsposition entspricht - entweder die Antriebsrolle oder der Antriebsmotor schräg zu dem restlichen Rangierantrieb angeordnet sein kann. Je nach zur Verfügung stehendem Bauraum können diejenigen Komponenten bezüglich der Hauptrichtung des Rangierantriebs schräggestellt werden, die sich aus technischen oder gestalterischen Gründen dafür eignen. Als Hauptrichtung des Rangierantriebs kann auch diejenige Richtung verstanden werden, die der Längsrichtung des Anhängers entspricht, an dem der Rangierantrieb befestigt werden soll.

Bei einer Variante kann der Träger durch die Bewegungseinrichtung auf einer Bewegungsachse zwischen der Ruheposition und der Antriebsposition hin- und herbewegbar sein. Dabei kann entweder bei einer ersten Variante die Antriebsrollen-Drehachse senkrecht zu der Bewegungsachse und die Antriebsmotor -Drehachse schräg zu der Bewegungsachse stehen oder bei einer zweiten Variante die Antriebsrollen-Drehachse schräg zu der Bewegungsachse und die AntriebsmotorDrehachse senkrecht oder parallel zu der Bewegungsachse stehen.

Als Bewegungsachse wird somit die Bewegungsrichtung des Trägers verstanden, die er vollzieht. wenn er von der Bewegungseinrichtung hin - bzw. herbewegt wird.

Bei einer dritten Variante können beide Drehachsen, sowohl die Antriebsrollen-Drehachse als auch die Antriebsmotor-Drehachse, schräg zu der Bewegungsachse stehen.

Die Bewegungsachse kann zudem eine Achse sein, zu der wenigstens eine Drehachse einer Komponente der Getriebeeinrichtung senkrecht steht. Auf diese Weise können zum Beispiel sowohl der Antriebsmotor als auch die Antriebsrolle schräg zu der Getriebeeinheit bzw. Komponenten der Getriebeeinheit ausgerichtet sein.

Die beiden Drehachsen sowie die Bewegungsachse können jeweils in einer Horizontalebene liegen. Ebenso ist es aber auch möglich, dass sich wenigstens eine der Drehachsen und/oder die Bewegungsachse aus der Horizontalebene heraus, also auch mit einer Vertikalkomponente erstrecken. In diesem Fall verläuft die betreffende Achse in einem schrägen Winkel zur Horizontalebene, so dass eine räumliche Schrägstellung erreicht wird.

Bei einer Variante steht die Antriebsrollen-Drehachse nur minimal schräg zu den restlichen Komponenten, insbesondere nur minimal schräg zu der Bewegungsachse des Trägers. Der Winkel der Antriebsrollen-Drehachse kann in diesem Fall z. B. nur wenige Grad, z.B. 1 bis 4° von einer senkrechten Anordnung zwischen der Antriebsrollen- Drehachse und der Bewegungsachse abweichen.

Der Antriebsmotor kann zum Beispiel ein Universalmotor oder ein bürstenloser Elektromotor sein. Insbesondere ein bürstenloser Elektromotor mit Außenläufer (Außenläufermotor) kann zweckmäßig sein, weil er einen besonders kompakten Aufbau ermöglicht. Insbesondere die axiale Länge eines derartigen Außenläufermotors ist gering und erhöht somit die Kompaktheit.

Ein Außenläufermotor hat zudem den Vorteil, dass er ein höheres Drehmoment erzeugt als ein Innenläufermotor. Zudem kann aufgrund des erhöhten Drehmoments die Drehzahl des Motors reduziert werden, was sich vorteilhaft für die Auslegung der zwischen dem Antriebsmotor und der Antriebsrolle erforderlichen Getriebeeinrichtung, insbesondere für die Anforderung an die Übersetzungsverhältnisse auswirkt. Durch die Bauform eines Außenläufermotors können darüber hinaus das Bauvolumen und Gewicht spürbar reduziert werden.

Es kann eine Bremseinrichtung vorgesehen sein, die ein Bremsen der Antriebsrolle bewirkt. Die Bremseinrichtung kann insbesondere direkt auf den Antriebsmotor, dessen Antriebswelle (Motorwelle) oder zum Beispiel auf den Außenläufer wirken und durch ein Bremsen der Antriebswelle oder des Außenläufers ein Abbremsen der Antriebsrolle bewirken.

Zu diesem Zweck kann die Bremseinrichtung stirnseitig zu dem Antriebsmotor angeordnet sein. Ergänzend oder alternativ kann die Bremseinrichtung an dem Außenläufer befestigt sein, um auf diese Weise ein Drehen des Motors bzw. des Außenläufers zu verhindern, was folglich auch zu einem Blockieren der Antriebsrolle führt.

Ebenso ist es möglich. dass die Bremseinrichtung an anderer Stelle wirkt, zum Beispiel in der Getriebeeinrichtung, um ein Bremsen bzw. Blockieren der Antriebsrolle zu erreichen.

Vorzugsweise ist zwischen dem Motor und dem Getriebe eine Kupplung zur Schwingungsdämpfung vorgesehen. Diese enthält üblicherweise eine dämpfendes Gummielement zwischen der Antriebs- und der Abtriebsseite, wodurch eventuelle Unwuchten oder Fluchtungsfehler ausgeglichen und Geräusche vermieden werden können. Die Kupplung kann auch als Balgkupplung ausgebildet sein.

Die Antriebsrolle kann über ihre axiale Erstreckung eine veränderliche Außenkontur aufweisen, derart, dass der Durchmesser der Antriebsrolle im Bereich ihrer axialen Mitte größer ist als an ihren axialen Rändern. Wenn die Antriebsrolle somit in der Mitte einen etwas größeren Durchmesser aufweist als an den Rändern, also z.B. eine bombierte Form aufweist, kann sie auf der Lauffläche des Anhängerrads etwas tiefer eindringen als an den Rändern. Da jedoch die Lauffläche des Anhängerrads prinzipbedingt weicher ist als die eher steiferen Flanken des Anhängerrads, kann auf diese Weise eine insgesamt gleichmäßige Anpressdruckverteilung zwischen Antriebsrolle und Anhängerrad erreicht werden.

Bei einer Ausführungsform kann die Antriebsrollen-Drehachse schräg zu der Drehachse des Rads des Anhängers stehen, wobei wenigstens ein Teil der Antriebsrolle in dem dem Rad des Anhängers zugewandten Bereich vor anderen Komponenten, insbesondere vor dem Träger oder dem Getriebegehäuse, in Richtung des Rads übersteht, derart, dass bei einem Bewegen des Trägers mit der Antriebsrolle aus der Ruheposition in die Antriebsposition zuerst der betreffende Teil der Antriebsrolle in Kontakt mit dem Rad des Anhängers gelangt, nämlich bevor die betreffende andere Komponente in Kontakt mit dem Rad gelangen kann.

Mit dieser Lösung kann insbesondere der sogenannten Störkanten-Problematik entgegen gewirkt werden. Wenn die betreffende Komponente, also insbesondere ein Teil des Trägers oder des Getriebegehäuses nach vorne in Richtung des Anhängerrads übersteht, besteht je nach Dimensionierung des Anhängerrads und der Anordnung des Rangierantriebs die Gefahr. dass die Komponente an dem Anhängerrad reibt oder schleift. Mit der Schrägstellung der Antriebsrollen-Drehachse wird erreicht, dass wenigsten ein Teil der Antriebsrolle nach vorne, in Richtung des Anhängerrads übersteht, und zwar noch über die anderen Komponenten hinaus. Dadurch gelangt dieser Teil der Antriebsrolle zuerst in Kontakt mit dem Anhängerrad. Da die Antriebsrolle in dieser Situation bereits ihre Antriebsposition erreicht hat, kann der Träger nicht mehr weiter in Richtung des Anhängerrads bewegt werden, so dass auch keine weiteren Komponenten mehr gegen das Anhängerrad gedrückt werden können.

Diese und weitere Vorteile und Merkmale der Erfindung werden nachfolgend anhand von Beispielen unter Zuhilfenahme der begleitenden Figuren näher erläutert. Es zeigen:
- Figur 1 eine perspektivische Außenansicht eines Rangierantriebs;
- Figur 2 in schematischer Schnitt darstellung einen Rangierantrieb mit schräg stehendem Antriebsmotor;
- Figur 3 in schematischer Schnittdarstellung einen Rangierantrieb mit schräg stehender Antriebsrolle;
- Figur 4 eine Darstellung der Störkanten -Problematik; und
- Figur 5 eine andere Ausführungsform eines Rangierantriebs mit schräg stehender Antriebsrolle.

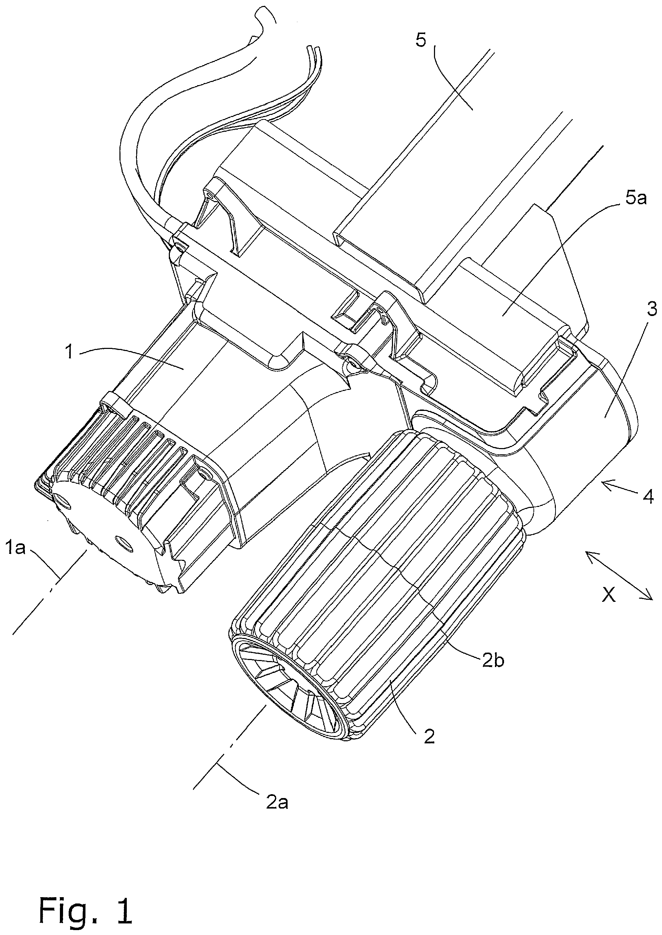

Fig. 1 zeigt in Perspektivansicht einen Rangierantrieb mit einem Antriebsmotor 1 und einer von dem Antriebsmotor 1 drehend antreibbaren Antriebsrolle 2.

Der Antriebsmotor 1 und die Antriebsrolle 2 sind von einem Träger 3 gehalten. Im Inneren des Trägers 3 ist auch eine Getriebeeinrichtung 4 angeordnet, die dazu dient, die verhältnismäßig hohe Drehzahl des Antriebsmotors 1 in eine niedrigere Drehzahl für die Antriebsrolle 2 zu übersetzen. Die Getriebeeinrichtung 4 ist in Fig. 1 nur von außen dargestellt. Insbesondere kann die Getriebeeinrichtung 4 mehrere Stufen aufweisen. um das gewünschte gesamte Übersetzungsverhältnis zu erreichen.

Der Träger 3 wird von einer Befestigungseinrichtung 5 gehalten, die ihrerseits an einem nicht dargestellten Fahrgestell eines Anhängers angebracht werden kann. Zum Beispiel kann die Befestigungseinrichtung 5 in Form eines Vierkantrohrs ausgeführt sein, das auf ein entsprechendes Querrohr (nicht dargestellt) aufgeschoben werden kann, wobei das Querrohr wiederum an der Unterseite des Anhängers befestigt ist.

Insbesondere kann die Befestigungseinrichtung 5 auch eine Halterung 5a aufweisen, die den Träger 3 trägt. Der Träger 3 ist dann relativ zu der Halterung 5a hin und her bewegbar. So kann es zweckmäßig sein, wenn die Halterung 5a eine geeignete Linearführung aufweist, um ein lineares Bewegen des Trägers 3 zu ermöglichen.

Der Träger 3 ist relativ zu der Befestigungseinrichtung 5 mit Hilfe einer nicht dargestellten Bewegungseinrichtung linear hin und her bewegbar. Auf diese Weise kann der Träger 3 zwischen einer Ruheposition, in der die Antriebsrolle 2 von einem Rad 6 des Anhängers getrennt ist, und einer Antriebsposition, in der die Antriebsrolle 2 gegen das Rad 6 des Anhängers gedrückt wird - wie in Fig. 1 gezeigt - hin- und herbewegt werden. Die Bewegungseinrichtung kann z. B. einen Spindelantrieb aufweisen, um die Bewegung des Trägers 3 zu ermöglichen.

Der Träger 3 ist zusammen mit dem Antriebsmotor 1 und der Antriebsrolle 2 sowie der Getriebeeinr1chtung 4 entlang der Bewegungsachse X in einer geraden oder gekrümmten Bahn hin - und her bewegbar, um zwischen der Ruheposition und der Antriebsposition verschoben werden zu können.

Erfindungsgemäß verlaufen die Drehachse 1a des Antriebsmotors 1 und die Drehachse 2a der Antriebsrolle 2 in einem schrägen Winkel zueinander, was später noch anhand weiterer Figuren erläutert wird.

Anders als bei der GB 2 439 383 stehen somit die Drehachsen 1 a, 2a von Antriebsmotor 1 und Antriebsrolle 2 nicht parallel zueinander, sondern in einem schrägen Winkel. Die Winkelstellung kann verhältnismäßig gering sein und zum Beispiel nur wenige Grad betragen. Durch die Winkelstellung wird u.a. erreicht, dass Stirnradstufen, die in der Getriebeeinrichtung 4 vorgesehen sind, weniger Geräusche produzieren, sodass der Rangierantrieb einen geräuscharmen Betrieb ermöglicht.

Darüber hinaus kann eine geringfügige Winkelstellung den Ausgleich von Toleranzen in den Lagern und Führungen im Lastzustand ermöglichen. Derartige Toleranzen ergeben sich insbesondere in der einseitigen Lagerung der Antriebsrolle 2 sowie in der Linearführung des Trägers 3 in der Halterung 5a. Wenn die Antriebsrolle 2 beim Andrücken gegen die Lauffläche des Anhängerrads belastet wird, wird sie aufgrund der einseitigen Lagerung zwangsläufig etwas ausweichen und dadurch ihre Winkelstellung verändern. Dadurch besteht die Gefahr, dass die Kraftübertragung zwischen der Antriebsrolle 2 und dem Anhängerrad nicht mehr optimal ist. Wenn hingegen durch die entsprechende Schrägstellung der Drehachse 2a der Antriebsrolle 2 diese Ausgleichbewegung vorweggenommen ist, kann auch im Lastzustand (Antriebsposition des Trägers 3) sichergestellt werden, dass die Drehachse 2a der Antriebsrolle 2 parallel zu der Drehachse des nicht dargestellten Anhängerrads steht. Diese Stellung ist für eine gleichmäßige Kraftübertragung und damit gute Traktion optimal.

Der Winkelausgleich der Antriebsrollen-Drehachse kann auch dadurch unterstützt werden, dass die Antriebsrolle 2 eine geringfügig bombierte Form aufweist. Insbesondere kann die Antriebsrolle 2 im Bereich ihrer axialen Mitte 2b einen größeren Durchmesser aufweisen als an ihren axialen Rändern bzw. Enden. Durch diese bombierte Form der Antriebsrolle 2 wird erreicht, dass der Druck in der Mitte der Lauffläche des Anhängerrads 2 etwas größer ist als an den steiferen Flanken des Rads. Dies führt zu einer Vergleichmäßigung des Anpressdrucks der Antriebsrolle 2 am Anhängerrad, so dass insgesamt das Drehmoment zuverlässiger übertragen werden kann.

Die Schrägstellung der Drehachsen 1 a, 2a von Antriebsmotor 1 und Antriebsrolle 2 ist bei dem Rangierantrieb von Fig. 1 derart gering, dass sie in der Figur nicht ohne weiteres erkennbar ist. So ist der Winkel zwischen den Drehachsen 1 a und 2a geringfügig über 0° und beträgt in dem gezeigten Beispiel 1,5°.

Die Winkelstellung zwischen Antriebsmotor und Antriebswelle kann aber - je nach Ausgestaltung - auch größer sein und dementsprechend auch größere Winkel einnehmen. Lediglich die Winkelstellung 90°, wie sie zum Beispiel aus der EP 1 7 14 858 A1 bekannt ist, wird nicht als schräge Winkelstellung angesehen.

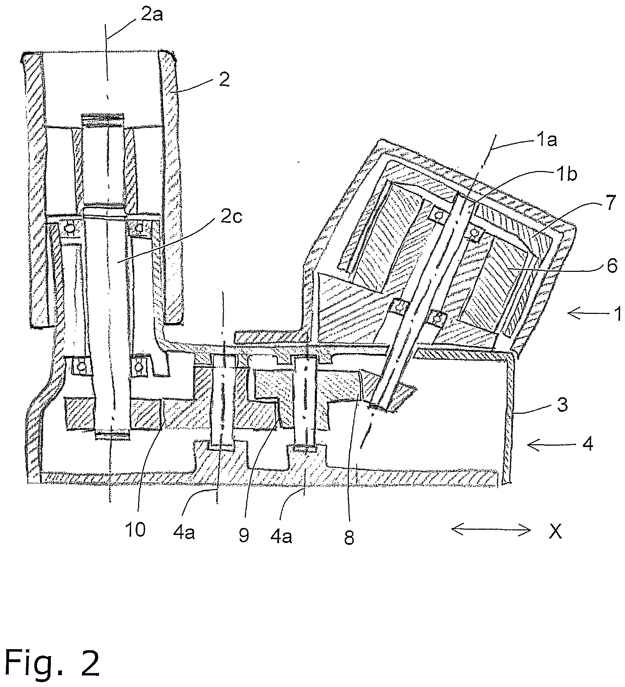

Fig. 2 zeigt in Schnittdarstellung ein Beispiel für eine Ausführung des Rangierantriebs von Fig. 1.

Hier ist deutlich erkennbar, dass eine Drehachse 1a des Antriebsmotors 1 in einem schrägen Winkel zu einer Drehachse 2a der Antriebsrolle 2 steht. Der Winkel in dem gezeigten Beispiel beträgt etwa 40 bis 45°. Wie oben gesagt, kann er aber auch deutlich größer oder kleiner sein.

Der Antriebsmotor 1 ist als bürstenloser Außenläufermotor ausgebildet, mit einem Innenstator 6 und einem Außenläufer 7. Der Außenläufer 7 ist mit einer Antriebswelle 1 b des Antriebsmotors 1 gekoppelt.

Sowohl der Antriebsmotor 1 als auch die Antriebsrolle 2 sind an dem Träger 3 gelagert bzw. gehalten.

Im Inneren des Trägers 3 ist die Getriebeeinrichtung 4 untergebracht. Dementsprechend dient der Träger 3 gleichermaßen als Getriebegehäuse für die Getriebeeinrichtung 4.

In dem in Fig. 2 gezeigten Beispiel weist die Getriebeeinrichtung 4 drei Über setzungsstufen auf.

Die Achsen 4a der Getriebeeinrichtung 4 stehen parallel zu der Drehachse 2a der Antriebsrolle 2 und damit im schrägen Winkel zu der Drehachse 1a des Antriebsmotors 1.

Dementsprechend ist die erste Getriebestufe 8 derart auszugestalten, dass eine Kraftübertragung über einen schrägen Winkel möglich ist. Dazu eignet sich zum Beispiel eine in Fig. 2 nur schematisch dargestellte Kegelradstufe. Alternativ kann auch eine schräggestellte Stirnradstufe oder eine Hypoidstufe genutzt werden.

Als weitere Getriebestufen (zweite Getriebestufe 9, dritte Getriebestufe 10) können Stirnradstufen eingesetzt werden.

In der Getriebeeinrichtung 4 können auch Doppelzahnräder (zum Beispiel für die zweite Getriebestufe 9 und die dritte Getriebestufe 1 0) genutzt werden, also Zahnräder, bei denen zwei Zahnräder auf einer gemeinsamen Achse angeordnet sind. Zur Fertigungsvereinfachung können die Doppelzahnräder einstückig bzw. einteilig ausgeführt werden.

Die Getriebeeinrichtung treibt schließlich eine Antriebswelle der Antriebsrolle 2 (Rollenwelle 2c) an.

An dem Antriebsmotor 1, insbesondere an dem Außenläufer 7 des Antriebsmotors 1 kann eine nicht dargestellte Bremseinrichtung vorgesehen sein, um den Antriebsmotor 1 und damit auch die Antriebsrolle 2 zu bremsen oder zu blockieren.

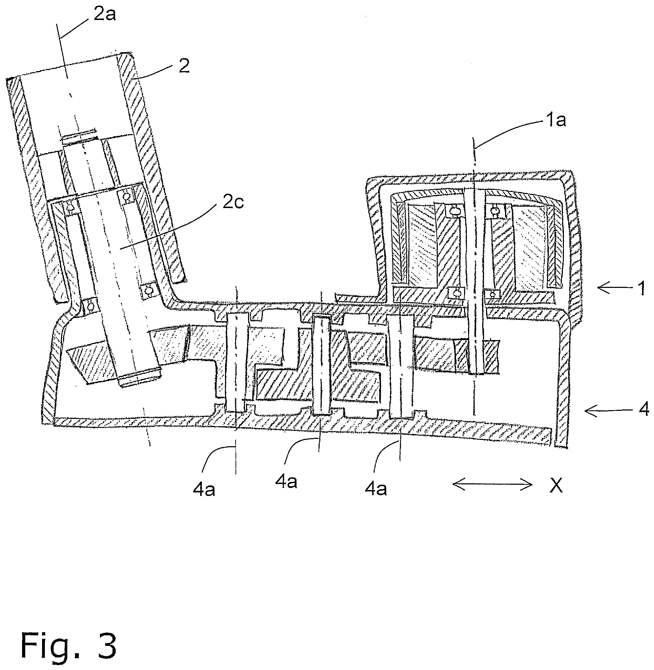

Fig. 3 zeigt eine Variante der Ausführungsform von Fig. 2.

Bei der Variante von Fig. 3 sind ebenfalls die Drehachse 1a des Antriebsmotors. 1 und die Drehachse 2a der Antriebsrolle 2 in einem schrägen Winkel zueinander angeordnet. Jedoch sind die Drehachse 1a des Antriebsmotors 1 und die Drehachsen 4a der Getriebeeinrichtung 4 parallel zueinander ausgerichtet, während die Drehachse 2a der Antriebsrolle 2 auch zu den Achsen 4a der Getriebekomponenten winklig bzw. schräg steht.

Die Schrägstellung der Drehachse 2a der Antriebsrolle 2 kann nur sehr geringfügig von einer Parallelanordnung der Drehachse 2a der Antriebsrolle 2 zu der Drehachse 1a des Antriebsmotors 1 abweichen, wie oben bereits dargelegt. So kann der Schrägstellungswinkel z.B. nur in einem Bereich von 1 bis 3° liegen.

Bei einem derart geringen Schrägstellungswinkel ist es nicht unbedingt erforderlich, in der Getriebeeinrichtung 4 ein entsprechendes Winkelgetriebe, z. B. ein Kegelradgetriebe vorzusehen. Vielmehr sind Stirnradgetriebe bekannt, die eine Schrägstellung der Drehachsen mit geringem Winkel tolerieren, so dass jedenfalls die Funktionsfähigkeit der Getriebeeinrichtung 4 über die Lebensdauer des Rangierantriebs gewährleistet ist.

Die Getriebeeinrichtung 4 von Fig. 3 ist ebenfalls wie die Getriebeeinrichtung 4 von Fig. 2 geeignet aufgebaut, um die Drehbewegung des Antriebsmotors 1 hinsichtlich der Drehzahl und des Drehmoments in eine geeignete Drehbewegung für die Antriebsrolle 2 zu bewegen.

Der verhältnismäßig kleine Winkel der beiden Drehachsen 1 a und 2a zueinander führt dazu, dass die Drehachsen 1 a, 2a nicht ganz parallel zueinander stehen. Dadurch ist der Wirkungsgrad der Getriebeeinrichtung geringfügig schlechter, was aber u.a. durch die Vorteile hinsichtlich der Geräuschentwicklung kompensiert wird.

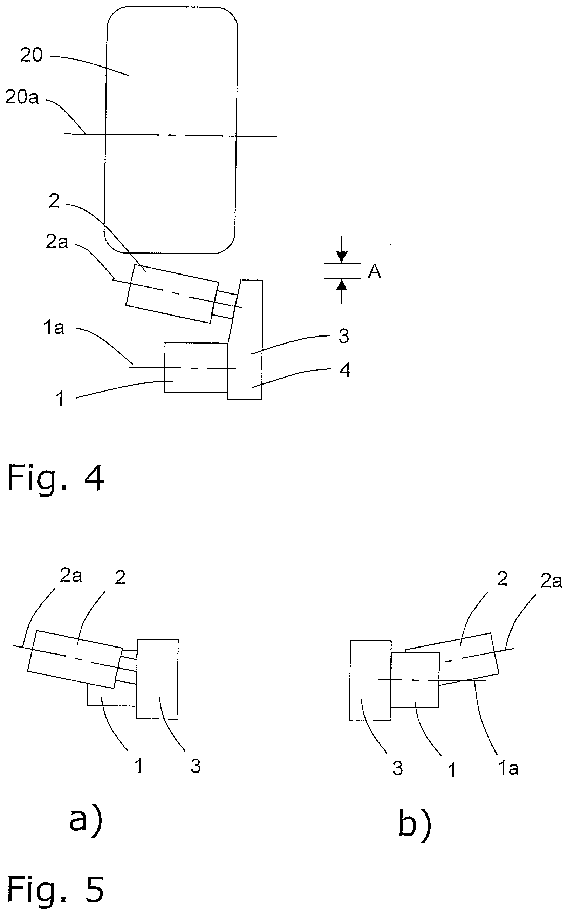

Fig. 4 dient zur Verdeutlichung der sogenannten Störkanten-Problematik.

In der Draufsicht ist der Rangierantrieb von Fig. 3 in schematischer Darstellung in Relation zu einem Rad 20 eines Anhängers gezeigt. Demnach steht die Drehachse 2a der Antriebsrolle 2 schräg zu der Drehachse 1a des Antriebsmotors und auch schräg zu der Drehachse 20a des Rads 20.

Durch die Schrägstellung der Drehachse 2a der Antriebsrolle 2 ist es möglich, dass wenigstens ein Teil der Antriebsrolle 2 nach vorne, in Richtung des Rads 20 im Verhältnis zu dem Träger 3 bzw. der Getriebeeinrichtung 4 übersteht. Der Überstand ist in Fig. 4 mit "A" gekennzeichnet. Das die Getriebeeinrichtung 4 umgebende Getriebegehäuse ragt somit weniger bzw. gar nicht über die Antriebsrolle 2 hinaus.

Beim Anstellen der Antriebsrolle 2 an die Lauffläche des Rads 20 wird s o die Gefahr vermindert, dass das Rad 20 an dem Träger 3 bzw. dem Getriebegehäuse der Getriebeeinrichtung 4 entlang schleifen kann.

Fig. 5 zeigt in schematischer Vorderansicht (Fig. 5a) und Rückansicht (Fig. 5b) eine Variante des Rangierantriebs mit schräg stehender Antriebsrolle.

In diesem Fall ist die Drehachse 2a der Antriebsrolle 2 mit einer vertikalen Komponente, hier nach oben, schräg gestellt, während die Drehachse 1a des Antriebsmotors 1 vollständig in einer Horizontalebene liegt.

Selbstverständlich ist auch eine Variante möglich, bei der die Drehachse 1 a des Antriebsmotors 1 mit einer Vertikalkomponente nach oben oder unten schräg steht, während die Antriebsrolle 2 vollständig in der Horizontalen liegt. Dabei können auch die Horizontalkomponenten der Erstreckungen der Drehachsen 1 a, 2a in einem schrägen Winkel zueinander stehen.

Schließlich sind auch Ausführungsformen denkbar, bei denen die Drehachsen 1 a und 2a windschief zueinander im Raum stehen. So kann es z. B. sein, dass sich wenigstens eine der Drehachsen 1 a, 2a sowohl mit einer Horizontalkomponente als auch mit einer Vertikalkomponente - bezogen auf eine Horizontalebene - erstreckt.

## Patentansprüche

1. Rangierantrieb für einen Anhänger, mit
- einer Befestigungseinrichtung (5) zum Befestigen an dem Anhänger;
- einem relativ zu der Befestigungseinrichtung (5) bewegbaren Träger (3);
- einem von dem Träger (3) gehaltenen Antriebsmotor; und mit
- einer von dem Antriebsmotor (1) drehend antreibbaren Antriebsrolle (2);
**dadurch gekennzeichnet, dass**
- die Drehachse (1 a) des Antriebsmotors (1) schräg zur Drehachse (2a) der Antriebsrolle (2) verläuft und dass der Winkel zwischen der Antriebsmotor-Drehachse (1a) und der Antriebsrollen-Drehachse (2a) größer als 0 Grad ist, so dass die Drehachsen (1 a, 2a) nicht parallel zueinander stehen, und ungleich 90 Grad ist, so dass die Drehachsen (1a, 2a) nicht senkrecht zueinander stehen.

2. Rangierantrieb nach einem der vorangehenden Ansprüche, **dadurch gekennzeichnet, dass** im Kraftfluss zwischen dem Antriebsmotor (1) und der Antriebsrolle (2) eine Getriebeeinrichtung (4) vorgesehenen ist.

3. Rangierantrieb nach Anspruch 4, **dadurch gekennzeichnet, dass** zwischen der Getriebeeinrichtung (4) und dem Antriebsmotor (1) eine Kupplung zur Schwingungsdämpfung und zum Ausgleich von Passungstoleranzen vorgesehen ist.

4. Rangierantrieb nach einem der Ansprüche 2 und 3, **dadurch gekennzeichnet, dass** die Getriebeeinrichtung (4) von dem Träger (3) gehalten ist.

5. Rangierantrieb nach einem der Ansprüche 2 bis 4, **dadurch gekennzeichnet, dass** die Getriebeeinrichtung (4) wenigstens eine Komponente aufweist, ausgewählt aus der Gruppe Stirnradstufe, Kegelradstufe, Kronradstufe, Schneckenradstufe, Hypoidstufe, Doppelzahnrad, einstückig ausgeführtes Doppelzahnrad, Riemengetriebe.

6. Rangierantrieb nach einem der Ansprüche 2 bis 5, **dadurch gekennzeichnet, dass**
- der Antriebsmotor (1) eine Antriebswelle (1b) aufweist, die sich entlang der Antriebsmotor-Drehachse (1a) erstreckt;
- die Antriebsrolle (2) eine Rollenwelle (2b) aufweist, die sich entlang der Antriebsrollen-Drehachse (2a) erstreckt;
- die Getriebeeinrichtung (4) wenigstens eine Zwischenstufe (8, 9, 10) mit einer Getriebewelle (4a) aufweist; und dass
- die Getriebewelle (4a) parallel zu der Antriebswelle (1b) oder parallel zu der Rollenwelle (2b) angeordnet ist.

7. Rangierantrieb nach einem der vorangehenden Ansprüche, **dadurch gekennzeichnet, dass**
- eine Bewegungseinrichtung vorgesehen ist, zum Bewegen des Trägers (3) zwischen einer Ruheposition, in der die Antriebsrolle (2) von einem Rad des Anhängers getrennt ist, und einer Antriebsposition, in der die Antriebsrolle (2) gegen das Rad des Anhängers gedrückt wird; und dass
- der Träger (3) durch die Bewegungseinrichtung auf einer Bewegungsachse (X) zwischen der Ruheposition und der Antriebsposition hin und her bewegbar ist.

8. Rangierantrieb nach Anspruch 7, **dadurch gekennzeichnet, dass** die Antriebsrollen-Drehachse (2a) senkrecht zu der Bewegungsachse (X) und die Antriebsmotor-Drehachse (1 a) schräg zu der Bewegungsachse (X) steht.

9. Rangierantrieb nach Anspruch 7, **dadurch gekennzeichnet, dass** die Antriebsrollen-Drehachse (2a) schräg zu der Bewegungsachse (X) und die Antriebsmotor-Drehachse (1a) senkrecht oder parallel zu der Bewegungsachse (X) steht.

10. Rangierantrieb nach Anspruch 7, **dadurch gekennzeichnet, dass** die Antriebsrollen-Drehachse (2a) und die Antriebsmotor -Drehachse (1 a) schräg zu der Bewegungsachse (X) stehen.

11. Rangierantrieb nach einem der vorangehenden Ansprüche, **dadurch gekennzeichnet, dass** der Antriebsmotor (1) ein bürstenloser Elektromotor mit Außenläufer ist.

12. Rangierantrieb nach einem der vorangehenden Ansprüche, **dadurch gekennzeichnet, dass** eine Bremseinrichtung vorgesehen ist.

13. Rangierantrieb nach einem der vorangehenden Ansprüche, **dadurch gekennzeichnet, dass** die Antriebsrolle (2) eine über ihre axiale Erstreckung veränderliche Außenkontur aufweist, derart, dass der Durchmesser der Antriebsrolle (2) im Bereich ihrer axialen Mitte (2b) größer ist als an ihren axialen Rändern.

14. Rangierantrieb nach einem der vorangehenden Ansprüche, **dadurch gekennzeichnet, dass**
- die Antriebsrollen-Drehachse (2a) schräg zu der Drehachse (20a) des Rads (20) des Anhängers steht; und dass
- wenigstens ein Teil der Antriebsrolle (2) in dem dem Rad (20) des Anhängers zugewandten Bereich vor anderen Komponenten in Richtung des Rads (20)übersteht, derart, dass bei einem Bewegen des Trägers (3) mit der Antriebsrolle (2) aus der Ruheposition in die Antriebsposition zuerst der betreffende Teil der Antriebsrolle (2) in Kontakt mit dem Rad (20) des Anhängers gelangt.

## Claims

1. A maneuvering drive for a trailer, comprising
- a fastening means (5) for fastening to the trailer;
- a carrier (3) which can be moved relative to the fastening means (5);
- a drive motor held by the carrier (3); and comprising
- a drive roller (2) adapted to be rotationally driven by the drive motor (1);
**characterized in that**
- the axis of rotation (1 a) of the drive motor (1) extends obliquely to the axis of rotation (2a) of the drive roller (2), and **in that** the angle between the drive motor axis of rotation (1a) and the drive roller axis of rotation (2a) is greater than 0 degrees, so that the axes of rotation (1a, 2a) are not parallel to each other, and is not equal to 90 degrees, so that the axes of rotation (1a, 2a) are not perpendicular to each other.

2. The maneuvering drive according to any of the preceding claims, **characterized in that** a transmission means (4) is provided in the force flow between the drive motor (1) and the drive roller (2).

3. The maneuvering drive according to claim 4, **characterized in that** a coupling for vibration damping and for the compensation of fit tolerances is provided between the transmission means (4) and the drive motor (1).

4. The maneuvering drive according to either of claims 2 and 3, **characterized in that** the transmission means (4) is held by the carrier (3).

5. The maneuvering drive according to any of claims 2 to 4, **characterized in that** the transmission means (4) includes at least one component selected from the group of spur gear section, bevel gear section, crown wheel section, worm gear section, hypoid section, double gear, integrally formed double gear, belt drive.

6. The maneuvering drive according to any of claims 2 to 5, **characterized in that**
- the drive motor (1) includes a drive shaft (1 b) which extends along the drive motor axis of rotation (1 a);
- the drive roller (2) includes a roller shaft (2b) which extends along the drive roller axis of rotation (2a);
- the transmission means (4) includes at least one intermediate section (8, 9, 10) with a transmission shaft (4a); and **in that**
- the transmission shaft (4a) is arranged parallel to the drive shaft (1 b) or parallel to the roller shaft (2b).

7. The maneuvering drive according to any of the preceding claims, **characterized in that**
- a movement means is provided, for moving the carrier (3) between a rest position, in which the drive roller (2) is spaced apart from a wheel of the trailer, and a drive position, in which the drive roller (2) is pressed against the wheel of the trailer; and **in that**
- the carrier (3) is adapted to be reciprocated between the rest position and the drive position on a movement axis (X) by the movement means.

8. The maneuvering drive according to claim 7, **characterized in that** the drive roller axis of rotation (2a) is perpendicular to the movement axis (X) and the drive motor axis of rotation (1 a) is oblique to the movement axis (X).

9. The maneuvering drive according to claim 7, **characterized in that** the drive roller axis of rotation (2a) is oblique to the movement axis (X) and the drive motor axis of rotation (1 a) is perpendicular or parallel to the movement axis (X).

10. The maneuvering drive according to claim 7, **characterized in that** the drive roller axis of rotation (2a) and the drive motor axis of rotation (1a) are oblique to the movement axis (X).

11. The maneuvering drive according to any of the preceding claims, **characterized in that** the drive motor (1) is a brushless electric motor with an external rotor.

12. The maneuvering drive according to any of the preceding claims, **characterized in that** a braking means is provided.

13. The maneuvering drive according to any of the preceding claims, **characterized in that** the drive roller (2) has an outer contour that is variable over its axial extent, such that the diameter of the drive roller (2) in the region of its axial center (2b) is larger than on its axial edges.

14. The maneuvering drive according to any of the preceding claims, **characterized in that**
- the drive roller axis of rotation (2a) is oblique to the axis of rotation (20a) of the wheel (20) of the trailer; and **in that**
- at least part of the drive roller (2) in the region facing the wheel (20) of the trailer projects towards the wheel (20) in front of other components such that upon a movement of the carrier (3) with the drive roller (2) from the rest position to the drive position, first the part in question of the drive roller (2) will move into contact with the wheel (20) of the trailer.

## Revendications

1. Entraînement de manoeuvre pour remorque, comportant
- un moyen de fixation (5) pour la fixation sur la remorque ;
- un support (3) mobile par rapport au moyen de fixation (5) ;
- un moteur d'entraînement retenu par le support (3) ; et comportant
- un rouleau d'entraînement (2) apte à être entraîné en rotation par le moteur d'entraînement (1) ;
**caractérisé en ce que**
- l'axe de rotation (1a) du moteur d'entraînement (1) s'étend en oblique par rapport à l'axe de rotation (2a) du rouleau d'entraînement (2) et **en ce que** l'angle entre l'axe de rotation (1a) du moteur d'entraînement et l'axe de rotation (2a) du rouleau d'entraînement est supérieur à 0 degré de sorte que les axes de rotation (1 a, 2a) ne sont pas parallèles l'un par rapport à l'autre, et est différent de 90 degrés de sorte que les axes de rotation (1a, 2a) ne sont pas perpendiculaires l'un par rapport à l'autre.

2. Entraînement de manoeuvre selon l'une des revendications précédentes, **caractérisé en ce qu'**un moyen de transmission (4) est prévu dans la ligne de force entre le moteur d'entraînement (1) et le rouleau d'entraînement (2).

3. Entraînement de manoeuvre selon la revendication 4, **caractérisé en ce qu'**il est prévu un embrayage pour l'amortissement de vibrations et pour la compensation de tolérances d'ajustement entre le moyen de transmission (4) et le moteur d'entraînement (1).

4. Entraînement de manoeuvre selon l'une des revendications 2 et 3, **caractérisé en ce que** le moyen de transmission (4) est retenu par le support (3).

5. Entraînement de manoeuvre selon l'une des revendications 2 à 4, **caractérisé en ce que** le moyen de transmission (4) présente au moins un composant choisi dans le groupe constitué d'un étage de roue droite, d'un étage de roue conique, d'un étage de couronne d'entraînement, d'un étage de roue tangente, d'un étage hypoïde, d'une double roue dentée, d'une double roue dentée réalisée d'un seul tenant, d'une transmission à courroie.

6. Entraînement de manoeuvre selon l'une des revendications 2 à 5, **caractérisé en ce que**
- le moteur d'entraînement (1) présente un arbre d'entraînement (1b) qui s'étend le long de l'axe de rotation (1a) du moteur d'entraînement ;
- le rouleau d'entraînement (2) présente un arbre de rouleau (2b) qui s'étend le long de l'axe de rotation (2a) du rouleau d'entraînement ;
- le moyen de transmission (4) présente au moins un étage intermédiaire (8, 9, 10) comportant un arbre de transmission (4a) ; et **en ce que**
- l'arbre de transmission (4a) est agencé parallèlement à l'arbre d'entraînement (1 b) ou parallèlement à l'arbre de rouleau (2b).

7. Entraînement de manoeuvre selon l'une des revendications précédentes, **caractérisé en ce que**
- il est prévu un moyen de déplacement pour déplacer le support (3) entre une position de repos dans laquelle le rouleau d'entraînement (2) est séparé d'une roue de la remorque, et une position d'entraînement dans laquelle le rouleau d'entraînement (2) est poussé contre la roue de la remorque ; et **en ce que**
- le support (3) est apte à être déplacé par le moyen de déplacement selon un mouvement de va-et-vient sur un axe de déplacement (X) entre la position de repos et la position d'entraînement.

8. Entraînement de manoeuvre selon la revendication 7, **caractérisé en ce que** l'axe de rotation (2a) du rouleau d'entraînement est perpendiculaire par rapport à l'axe de déplacement (X) et **en ce que** l'axe de rotation (1 a) du moteur d'entraînement est incliné par rapport à l'axe de déplacement (X).

9. Entraînement de manoeuvre selon la revendication 7, **caractérisé en ce que** l'axe de rotation (2a) du rouleau d'entraînement est incliné par rapport à l'axe de déplacement (X) et **en ce que** l'axe de rotation (1a) du moteur d'entraînement est perpendiculaire ou parallèle à l'axe de déplacement (X).

10. Entraînement de manoeuvre selon la revendication 7, **caractérisé en ce que** l'axe de rotation (2a) du rouleau d'entraînement et l'axe de rotation (1a) du moteur d'entraînement sont inclinés par rapport à l'axe de déplacement (X).

11. Entraînement de manoeuvre selon l'une des revendications précédentes, **caractérisé en ce que** le moteur d'entraînement (1) est un moteur électrique sans balais à induit extérieur.

12. Entraînement de manoeuvre selon l'une des revendications précédentes, **caractérisé en ce qu'**il est prévu un moyen de freinage.

13. Entraînement de manoeuvre selon l'une des revendications précédentes, **caractérisé en ce que** le rouleau d'entraînement (2) présente un contour extérieur variable sur son étendue axiale, de sorte que le diamètre du rouleau d'entraînement (2), dans la zone de son centre axial (2b), est supérieur à celui au niveau de ses bords axiaux.

14. Entraînement de manoeuvre selon l'une des revendications précédentes, **caractérisé en ce que**
- l'axe de rotation (2a) du rouleau d'entraînement est incliné par rapport à l'axe de rotation (20a) de la roue (20) de la remorque ; et **en ce que**
- dans la zone tournée vers la roue (20) de la remorque, au moins une partie du rouleau d'entraînement (2) fait saillie vers la roue (20) devant d'autres composants, de sorte que lors d'un déplacement du support (3) avec le rouleau d'entraînement (2) hors de la position de repos vers la position d'entraînement, la partie concernée du rouleau d'entraînement (2) parvient d'abord en contact avec la roue (20) de la remorque.
